# EUROPEAN PATENT APPLICATION

(11) **EP 4 653 754 A1**
(43) Date of publication of application: **26.11.2025**
(21) Application number: 24177920.6
(22) Date of filing: 24.05.2024
(51) Int. Cl.: F17C 13/06

(54) **REMOVABLE CLOSURE FOR A CRYOGENIC TANK, ESPECIALLY FOR AN AIRCRAFT, CRYOGENIC TANK, AND AIRCRAFT**

(71) Applicant: AIRBUS Operations GmbH, 21129 Hamburg (DE)
(72) Inventor: Puschmann, Carsten, Hamburg (DE); Lammert, Nils, Hamburg (DE)
(74) Representative: KASTEL Patentanwälte PartG mbB

(57) **Abstract**

A removable closure for a cryogenic tank (10) is provided, wherein the cryogenic tank (10) comprises a tank interior (46) for storing a cryogenic medium, and an access opening (44) in a multiple tank wall (42) which includes a tank wall vacuum insulation space (54) between an inner tank wall skin (50) and an outer tank wall skin (52). The removable closure (48) comprises an outer closure wall (2) and an inner closure wall (3), and a closure vacuum insulation volume (7) between the outer closure wall (2) and the inner closure wall (3). The removable closure (48) is configured for the installation of equipment (74) that is required for operating the cryogenic tank (10) in the closure vacuum insulation volume (7) formed in the interior of the removable closure (48). A cryogenic tank (10) comprises the closure (10). An aircraft comprises the cryogenic tank (10) with the closure (48)

## Description

The invention relates to a removable closure for a cryogenic tank, especially for an aircraft. Further the invention relates to a cryogenic tank comprising such a closure. In addition, the invention relates to an aircraft comprising such a cryogenic tank or closure.

According to preferred embodiments, the cryogenic tank is a liquid hydrogen (LH2) tank for storing liquid hydrogen.

For technical background, reference is made to the following literature:
DE 10 2014 107 316 A1
US 2021/0 078 702A1
WO 2021/148 335A1
US 2023/0 002 069 A1
EP 4 119 834 A1
EP 4 124 568 A1
EP 4 124 790 A1
Product Sheet: Demaco-Cryogenics Johnston Coupling, download on 23.05.2023
EP 4 279 392 A1

[1] to [3] and [9] relate to hydrogen installations in an aircraft. [4] to [7] relate to cryogenic tanks, especially liquid hydrogen tanks (LH2 tanks), for an aircraft and to aircrafts with such a cryogenic tank. [8] relates to a so-called Johnston coupling for coupling cryogenic pipe section.

Lightweight energy storage is a key topic for next generation aircrafts. Hydrogen offers high energy densities, whereas the storage technique (cryogenic, compressed, solid state/absorbed) is a key issue. Hydrogen can be compressed and/or cooled down to cryogenic temperatures to increase the volumetric and gravimetric energy density. Usually, complex tank systems are needed with individual requirements to the materials, design and working principle e.g., regarding operational safety.

Compressed and cryogenic hydrogen are the techniques of choice for to-day's vehicles, like cars or airplanes. Cryogenic tanks can achieve the lowest fuel volume / fuel mass ratio.

Cryogenic tanks like e.g. LH2 tanks need a very good thermal insulation. Therefore, cryogenic tanks usually have a double wall vacuum insulated design, i.e. they have a double wall comprising a vacuum space, which surrounds the interior of the tank.

Hydrogen tanks are completely closed, normally by welding. However, for maintenance of such cryogenic tanks, it is necessary to have access to the interior of the tank. Hence, equipment or installations inside the tank can only be maintained or replaced with a large effort. As a consequence, the complete tank needs to be removed e.g. from the aircraft and repaired outside the aircraft, where the tank is cut open in order to be able to do the maintenance activities inside the tank.

In addition, the vacuum for thermal insulation surrounding the interior of the tank is a high vacuum, which is difficult to produce. It may take days and weeks to create such a vacuum within the wall of the cryogenic tank. Therefore, maintenance of the cryogenic tank requires a large effort and in addition a relative long period of time in which the tank cannot be used.

Further, cryogenic tanks usually have an equipment capsule containing the tank equipment, like e.g. valves, sensors, level gauges etc., which is required for handling and operation of such tank. The equipment capsule is attached to the tank or installed separately. The equipment may be partially inside the tank, but a significant part is installed separately inside the protective housing or capsule.

To limit heat ingress, the protective housing or capsule, which is also referred to as coldbox, is often being vacuumized or at least filled with inert gas. Due to leakage prevention reasons, such valves, sensors, etc. and connecting pipes are welded together inside the protective housing. Any maintenance of the equipment is therefore complicated.

For maintenance activities on the protective housing or the tank, they need to be removed from the vehicle or aircraft in which they are installed.

Therefore, in addition of the high effort and time required for maintenance of the tank, a further high effort and a long period of time is needed for maintenance of the equipment contained in the capsule which is necessary to operate the cryogenic tank.

It is the object of the invention to improve hydrogen tanks for use in vehicles, such as an aircraft. In particular, the effort, time and costs for maintenance of the tank and the tank equipment shall be reduced.

According to a first aspect, the invention provides a removable closure for a cryogenic tank, the cryogenic tank comprising a tank interior for storing a cryogenic medium, and an access opening in a multiple tank wall which includes a tank wall vacuum insulation space between an inner tank wall skin and an outer tank wall skin, wherein the removable closure comprises an outer closure wall and an inner closure wall and a closure vacuum volume between the outer closure wall and the inner closure wall; wherein the removable closure is configured for the installation of equipment that is required for operating the cryogenic tank in the closure vacuum insulation volume formed in the interior of the removable closure.

The main advantages of the invention are:
a) Reduced space for the tank and the capsule, because it is formed by the removable closure containing the vacuum insulation volume.
b) Less heat ingress into the capsule.
c) Less risk of external H2 leak.
d) The equipment becomes replaceable, e.g. with the tank closure, without cutting the tank structure and breaking the tank vacuum.
e) No vacuum is impacted by opening and closing the removable closure.

In particular, the removable closure of the cryogenic tank forms the protective housing or capsule containing the tank equipment, i.e. the capsule is integrated into the removable tank closure.

Preferably, the removable closure is inserted into the tank. Thus, the heat ingress into the capsule is drastically reduced.

Preferably, the removable closure is positioned to a large extent inside the tank when the tank is closed. This leads in particular to a less risk of an external H2 leak.

Preferably, the inner closure wall is spaced apart from the outer closure wall at a distance so that at least a portion of the closure vacuum insulation volume is placed inside the cryogenic tank when the access opening is closed.

Preferably, the inner closure wall is positioned at the bottom of the removable closure. That creates a large vacuum volume that is now used to install the equipment therein, instead of installing it outside the tank in a protective housing or capsule.

Preferably, the removable closure comprises a ring wall, which may form a tube, connecting the outer closure wall with the inner closure wall to form the closure vacuum insulation volume.

Preferably, a closure flange, which may be formed as a flange ring, is attached to the ring wall for fixing the removable closure to a tank flange or tank flange ring mounted at the cryogenic tank.

Preferably, one or more pipes extend through the outer closure wall into the closure vacuum volume.

Preferably, one or more pipes extend through the closure vacuum volume and through the inner closure wall

Preferably, one or more pipes extend into or through the interior of the cryogenic tank when it is closed.

Preferably, the removable closure comprises a vacuum port for evacuation of the closure vacuum insulation volume.

Preferably, a multilayer insulation is fitted inside the closure interspace vacuum volume.

Preferably, the closure comprises or may be formed as a panel, which is e.g. formed by the outer and/or inner closure wall. In particular, the panel is a double walled access panel.

According to a second aspect, the invention provides a cryogenic tank comprising a multiple tank wall, an access opening in the multiple tank wall allowing access to an interior of the cryogenic tank for maintenance, repair and/or replacement services, and a removable closure for closing the access opening, wherein the multiple tank wall includes an inner tank wall skin, an outer tank wall skin and a tank wall vacuum insulation space between the inner tank wall skin and the outer tank wall skin, wherein the removable closure is configured according to the first aspect of the invention.

Preferably, the access opening in the multiple tank wall is defined by a multiple wall tank ring with an outer tank ring wall arrangement, an inner tank ring wall and a tank ring vacuum insulation space between the outer and inner tank ring walls.

Preferably, the ends of the multiple wall tank ring are tightly closed to form the tank ring vacuum insulation space between the outer and inner tank ring walls.

Preferably, the outer tank ring wall arrangement comprises an inside outer tank ring wall arranged inside the inner tank wall skin and an outside outer tank ring wall arranged outside the outer tank wall skin.

Preferably, the outer tank ring wall arrangement is tightly connected to the outer and inner tank wall skin so that the tank wall vacuum insulation space and the tank ring vacuum insulation space are in fluid communication with each other and/or form a single tank wall interspace vacuum volume.

Preferably, that the access opening has a tank flange and the closure has a closure flange which mates to the tank flange so that in a closed state the closure flange is tightly connected, especially by a number of bolt and screw assemblies, to the tank flange.

According to a third aspect, the invention provides an aircraft comprising a cryogenic tank equipped with a removable closure according to the first aspect of the invention.

Characteristics and advantages described in relation to the removable closure are also related to the cryogenic tank, and vice versa.

In the following, exemplary embodiments of the invention showing further advantages and characteristics are described in detail with reference to the figures, in which:
- **Fig. 1**: depicts an aircraft having a cryogenic tank;
- **Fig. 2**: is a sectional view through a part of the cryogenic tank (e.g., a top part) with an access opening and a closure for this access opening in a closed state;
- **Fig. 3**: is a sectional view as in Fig. 2 wherein the access opening and the closure are in an open state; and
- **Fig. 4**: is a view of the cryogenic tank with the access opening and the closure in the closed state;
- **Fig. 5**: shows enlarged section of the tank access in an open state; and
- **Fig. 6**: shows enlarged section of the tank access in a closed state.

In the figures, similar or identical elements and features are designated by the same reference numbers.

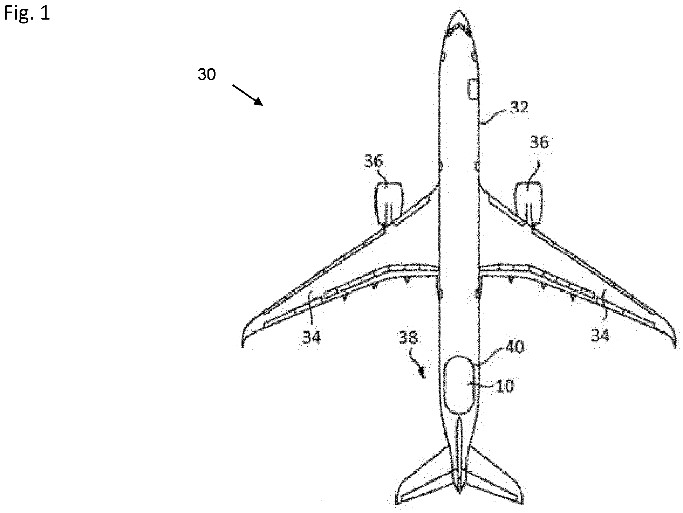

Referring to **Fig. 1****,** an aircraft 30 comprises a fuselage 32. The aircraft 30 further comprises a pair of wings 34 that are attached to the fuselage 32. Furthermore, an engine 36 is attached to each wing 34.

The aircraft 30 comprises an aft section 38, which includes a horizontal and vertical tail plane. Furthermore, the aircraft 30 comprises a tank arrangement 40. The tank arrangement 40 includes a cryogenic tank 10 that is preferably arranged in the aft section 38. It should be noted that the cryogenic tank 10 may have a different shape and/or be located in a different section of the aircraft 30.

The tank 10 includes hydrogen fuel that can be fed to the engines 36. The hydrogen fuel may also be fed to fuel cells (not depicted) where the hydrogen is converted into electrical energy, and the electrical energy is then fed to the engines 36. The hydrogen fuel is stored in the tank 10 in the form of a cryogenic liquid, i.e., liquid hydrogen (LH2).

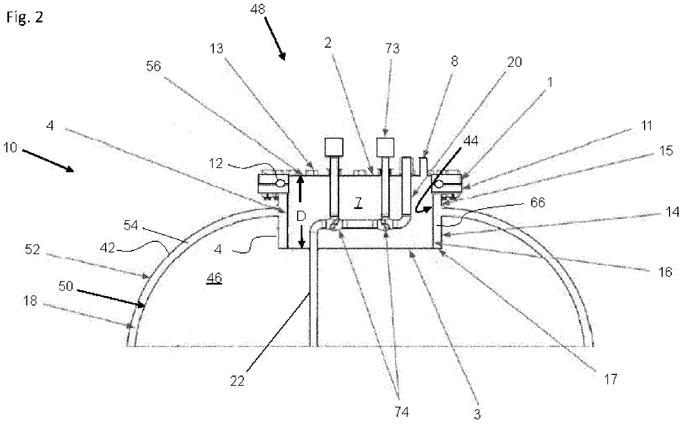

Referring to **Figs. 2 to 6****,** a preferred embodiment of the cryogenic tank 10 and a preferred embodiment of a removable closure 48 for a cryogenic tank are explained in more detail.

The cryogenic tank 10 comprises a multiple tank wall 42, an access opening 44 in the multiple tank wall 42 allowing access to an interior 46 of the cryogenic tank 10 for maintenance or repair services and a closure 48 or cap for closing the access opening 44.

In the embodiment shown, the cryogenic tank 10 is a double walled tank 10 wherein the multiple tank wall 42 includes an inner tank wall skin 50, an outer tank wall skin 52 and a tank wall vacuum insulation space 54 between the inner tank wall skin 50 and the outer tank wall skin 52.

The closure 48 comprises an upper or outer closure wall 2, a lower or inner closure wall 3 and a closure vacuum insulation volume 7 between the outer closure wall 2 and the inner closure wall 3.

The closure 48 is configured for the installation of equipment 74 that is required for operating the cryogenic tank 10 in the closure vacuum insulation volume 7, which is formed in the interior of the closure 48.

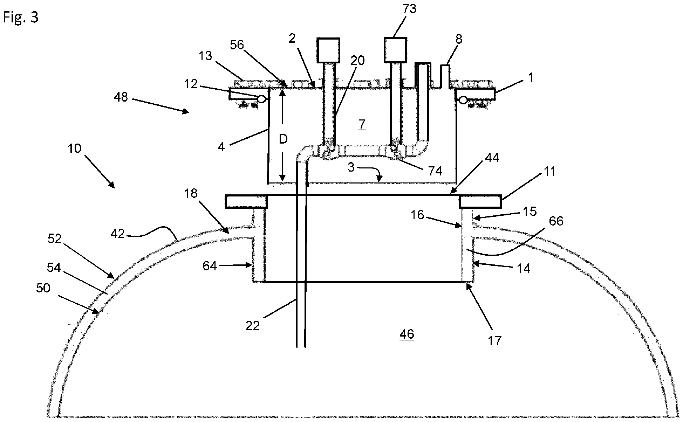

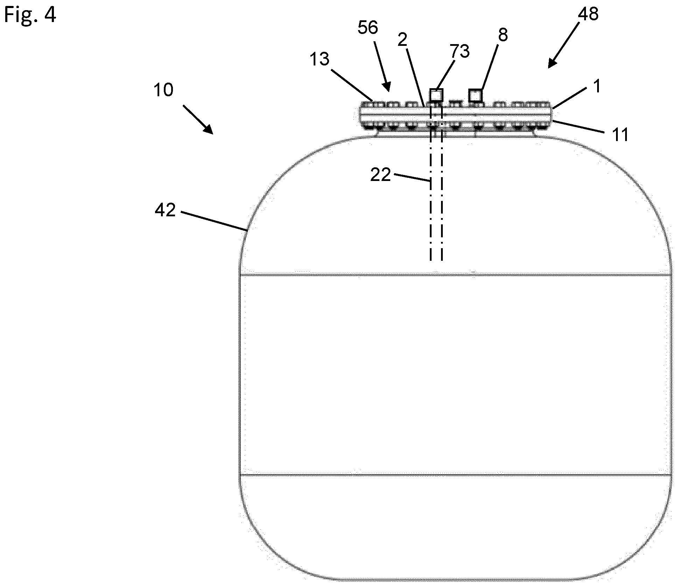

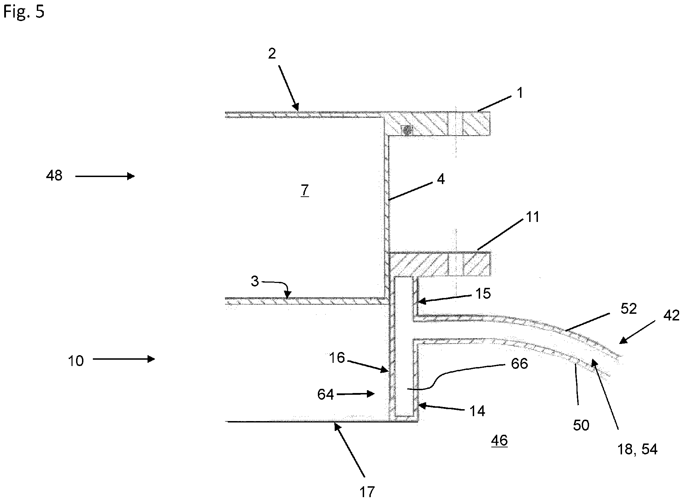

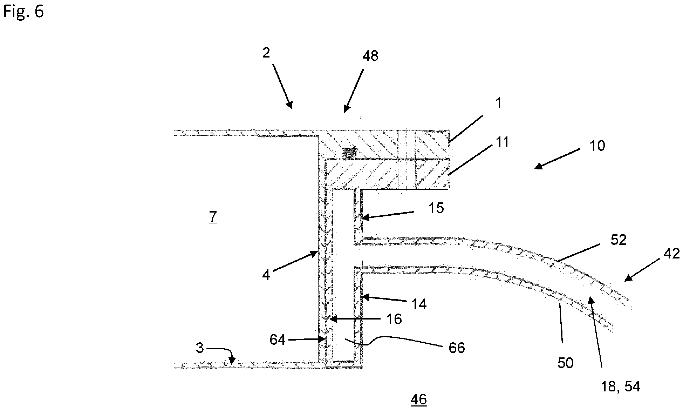

In the embodiments shown, the access opening 44 is arranged in a top part of the cryogenic tank 10. **Fig. 2** shows a sectional view through this top part in the closed state, **Fig. 3** shows the sectional view in the open state, **Fig. 4** shows a perspective view in the closed state, **Fig. 5** shows an enlarged section of the tank access in an open state, and **Fig. 6** shows an enlarged section of the tank access in a closed state.

In the embodiments shown, the closure 48 may form or comprise a panel 56, in particular a double walled access panel, which includes the outer and inner closure walls 2, 3 which are also referred to as outer and inner panel walls. The closure vacuum insulation volume 7 is also referred to as a panel vacuum insulation space.

The inner closure wall 3 is spaced apart from the outer closure wall 2 at a distance D which allows that at least a portion of the closure vacuum insulation volume 7 is placed in the interior 46 of the cryogenic tank 10 when the access opening 44 is closed by the removable closure 48. In this way, at least a part of the closure vacuum insulation volume 7 is surrounded by the cryogenic medium within the interior 46 of cryogenic tank 10, and thus it is perfectly insulated.

In the embodiment shown, the inner closure wall 3 is positioned at the bottom of the removable closure 48. This creates a very large vacuum that is used to install the equipment 74 of the cryogenic tank 10.

The removable closure 48 comprises a ring wall 4 formed as a tube, which connects the outer closure wall 2 with the inner closure wall 3 to form the closure vacuum insulation volume 7.

The ring wall 4 is attached to a closure flange 1 formed as a flange ring for fixing the removable closure 48 to a tank flange 11 which is formed as a flange ring as well, and which is mounted at the cryogenic tank 10.

The ring wall 4 of closure 48, the outer closure wall 2 located at the upper end of closure 10 and the inner closure wall 3 located at the lower end of closure 10, are welded together to form the closure vacuum insulation volume 7, which is also referred to as panel vacuum volume or panel vacuum insulation space.

A number of pipes 20, 22 are running into the tank 10 and are routed through the closure 48. They extend from the exterior of the closure 48 through the outer closure wall 2 into the closure vacuum insulation volume 7.

Equipment actuators 73 are installed outside the tank 10 and the closure 48, and connected by the pipes 20, 22 with the interior 46 of tank 10.

Pipe 22 extends through the closure vacuum insulation volume 7 and through the inner closure wall 3 into or through the interior 46 of the cryogenic tank.

The removable closure 48 further comprises a vacuum port 8 for evacuation of the closure vacuum insulation volume 7. Air is extracted through the vacuum port 8 to create a vacuum in the vacuum insulation volume 7 formed in the interior of closure 48.

An insulation formed as a Multi Layer Insulation (MLI) is fitted inside the closure vacuum insulation volume 7.

On the side of the multiple tank wall 42 is tank flange 11, which is mounted at the multiple tank wall 42 and meets the closure flange 1, also referred to as panel flange. A seal 12 is installed between the tank flange 11 and the closure flange 1. The flanges 1, 11 are bolted together by a number of bolt and screw assemblies 13.

In some embodiments, the multiple tank wall 42 includes a multiple wall tank ring 64 having an outer tank ring wall arrangement 14, 15, an inner tank ring wall 16 and a tank ring vacuum insulation space 66 between the outer and inner tank ring walls 14, 15, 16.

In some embodiments, the outer tank ring wall arrangement 14, 15 comprises an inside outer tank ring wall 14 arranged inside of the inner tank wall skin 50 and an outside outer tank ring wall 15 arranged outside of the outer tank wall skin 52.

As can be seen particularly in the enlarged views of **Figs. 5** **and** **6****,** the multiple wall tank ring 64 forms a kind of shaft connected to the tank flange 11. This shaft consists of the inside outer tank ring wall 14 (e.g., a lower outer ring made from the tank wall material), the outside outer tank ring wall 15 (e.g., an upper outer ring made from the tank wall material), the inner tank ring wall 16 (e.g., an inner ring made from the tank wall material), and an inside closing plate 17 or end plate (e.g., a lower closing plate made from the tank wall material for closing the inside end of the multiple wall tank ring 64). The other end of the multiple wall tank ring 64 is tightly closed by the tank flange 11.

The surfaces of the closure ring wall 4, which forms an outer tube, and the inner tank ring wall 16, which forms an inner tube, have smooth surfaces such that a tight fit is created, which is similar to the fit used in the so-called Johnston Couplings for cryogenic fluid pipes.

All the tank side parts 11, 14, 15, 16, 17, 50, and 52 are welded to form the multiple tank wall 42 with the access opening 44 defined by the multiple wall tank ring 64.

A single tank wall interspace volume 18 is created within the multiple tank wall 42. In other words, the vacuum insulation spaces 54, 66 between the inner and outer tank wall skins 50, 52 and between the tank ring walls 14, 15, 16 are combined into the single tank wall interspace volume 18. This tank wall interspace volume 18 is also thermally insulated by a Multi Layer Insulation (MLI - not shown in detail).

The closure insulation vacuum volume 7 is part of the thermal insulation of the cryogenic tank 10, together with the evacuated tank wall insulation spaces 54,66.

The pipes 20, 22 that are running into the cryogenic tank 10 are routed through the access panel 56, i.e. through the closure 48 and the closure vacuum insulation volume 7 formed therein. Therefore, it is not necessary that the pipes 20, 22 are fitted with a double walled section to minimise heat ingress along the pipes 20, 22.

The pipes 20,22 may also serve as a structural support, i.e. they may ensure the distance D between the outer panel wall 2 and the inner panel wall 3.

A cryogenic tank 10 for an aircraft 30 has been described above, which is providing a tank access for maintenance, inspection and repair inside the tank onboard of the aircraft 30. An access opening 44 is closed by a removable closure 48 including or forming a multiple wall panel 56 which forms a vacuum insulation volume 7 of the tank 10 when it is closed, such that the heat ingress into the cryogenic tank 10 is minimized.

The equipment 74 of the cryogenic tank 10, which is needed for operating the tank, like e.g. pipes, sensors level gauges, etc., is located within the vacuum insulation volume 7 of the removable closure 48 of the cryogenic tank 10.

The invention improves the system installation on a liquid hydrogen tank. Such tanks normally have an equipment capsule, containing the tank equipment (valves, sensors, etc.), which is hitherto attached to the tank or installed separated from the tank. The invention provides an improved technical solution for such a capsule. This invention may particularly be used on hydrogen powered aircrafts.

### List of reference signs:

- 1: closure flange
- 2: upper closure wall / outer closure wall
- 3: lower or inner closure wall
- 4: closure ring wall / tube
- 7: closure vacuum insulation volume
- 8: vacuum port
- 10: cryogenic tank
- 11: tank flange
- 12: seal
- 13: bolt and screw arrangement
- 14: inside outer tank ring wall
- 15: outside outer tank ring wall
- 16: inner tank ring wall
- 17: inside closing plate
- 18: tank wall interspace volume
- 20,22: pipes
- 30: aircraft
- 32: fuselage
- 34: wing
- 36: engine
- 38: aft section
- 40: tank arrangement
- 42: multiple tank wall (e.g., double tank wall)
- 44: access opening
- 46: interior of the tank
- 48: closure
- 50: inner tank wall skin
- 52: outer tank wall skin
- 54: tank wall insulation space
- 56: panel
- 64: multiple wall tank ring
- 66: tank ring vacuum insulation space
- 74: equipment
- 73: equipment actuators

- D: distance

## Claims

1. Removable closure for a cryogenic tank (10), wherein the cryogenic tank (10) comprises a tank interior (46) for storing a cryogenic medium,
and an access opening (44) in a multiple tank wall (42) which includes a tank wall vacuum insulation space (54) between an inner tank wall skin (50) and an outer tank wall skin (52),
wherein the removable closure (48) comprises an outer closure wall (2) and an inner closure wall (3), and a closure vacuum insulation volume (7) between the outer closure wall (2) and the inner closure wall (3),
wherein the removable closure (48) is configured for the installation of equipment (74) that is required for operating the cryogenic tank (10) in the closure vacuum insulation volume (7) formed in the interior of the removable closure (48).

2. Removable closure according to claim 1, **characterized in that** the inner closure wall (3) is spaced apart from the outer closure wall (2) at a distance (D) so that at least a portion of the closure vacuum insulation volume (7) is placed inside the cryogenic tank (10) when the access opening (44) is closed.

3. Removable closure according to claim 1 or 2, **characterized in that** the inner closure wall (3) is positioned at the bottom of the removable closure (48).

4. Removable closure according to one of the preceding claims, **characterized in that** the removable closure (48) comprises a ring wall (4) connecting the outer closure wall (2) with the inner closure wall (3) to form the closure vacuum insulation volume (7), and a closure flange (1) attached to the ring wall (4) for fixing the removable closure (48) to a tank flange (11) which is mounted at the cryogenic tank (10).

5. Removable closure according to one of the preceding claims, **characterized in that** one or more pipes (20, 22) extend
5.1. through the outer closure wall (2) into the closure vacuum insulation volume (7), and/or
5.2. through the closure vacuum insulation volume (7) and through the inner closure wall (3), and/or
5.3. into or through the interior (46) of the cryogenic tank (10) when it is closed.

6. Removable closure according to one of the preceding claims, **characterized by** a vacuum port (8) for evacuation of the closure vacuum insulation volume (7).

7. Removable closure according to one of the preceding claims, a multilayer insulation is fitted inside the closure vacuum insulation volume (7).

8. Cryogenic tank (10) comprising a multiple tank wall (42),
an access opening (44) in the multiple tank wall (42) allowing access to an interior (46) of the cryogenic tank (10) for maintenance, repair and/or replacement services,
and a removable closure (48) for closing the access opening (44),
wherein the multiple tank wall (42) includes an inner tank wall skin (50), an outer tank wall skin (52) and a tank wall vacuum insulation space (54) between the inner tank wall skin (50) and the outer tank wall skin (52),
wherein the removable closure (48) is configured according to one of claims 1 to 7.

9. Cryogenic tank according to claim 8, **characterized in that** the access opening (44) in the multiple tank wall (42) is defined by a multiple wall tank ring (64) with an outer tank ring wall arrangement (14, 15), an inner tank ring wall (16) and a tank ring vacuum insulation space (66) between the outer and inner tank ring walls (14, 15, 16).

10. Cryogenic tank (10) according to claim 9, **characterized in that**
10.1. the ends of the multiple wall tank ring (64) are tightly closed, and/or
10.2. the outer tank ring wall arrangement (14, 15) comprises an inside outer tank ring wall (14) arranged inside the inner tank wall skin (50) and an outside outer tank ring wall (15) arranged outside the outer tank wall skin (52); and/or
10.3. the outer tank ring wall arrangement (14, 15) is tightly connected to the outer and inner tank wall skin (50, 52) so that the tank wall vacuum insulation space (54) and the tank ring vacuum insulation space (66) are in fluid communication with each other and/or form a single tank wall interspace vacuum volume (18).

11. Cryogenic tank (10) according to one of claims 8 to 10, **characterized in that** the access opening (44) has a tank flange (11) and the closure (48) has a closure flange (1) which mates to the tank flange (11) so that in a closed state the closure flange (1) is tightly connected, especially by a number of bolt and screw assemblies (13), to the tank flange (11).

12. Aircraft (20) comprising a cryogenic tank (10) equipped with a removable closure (48) according to one of claims 1 to 7 and/or a cryogenic tank (10) according to one of claims 8 to 11.
